# EUROPÄISCHE PATENTSCHRIFT

(11) **EP 1 638 004 B1**
(45) Veröffentlichungstag und Bekanntmachung des Hinweises auf die Patenterteilung: **21.02.2007**
(21) Anmeldenummer: 04022236.6
(22) Anmeldetag: 17.09.2004
(51) Int. Cl.: G06F 12/12

(54) **Cache-Struktur für den Schnellzugriff auf getrennt gespeicherte Objekte**
Cache structure for quick access on objects stored separately
Structure d'anté-mémoire pour l'accès rapide à des objets stockés séparémment

(43) Veröffentlichungstag der Anmeldung: 22.03.2006
(73) Patentinhaber: Vantage Film GmbH, 92637 Weiden (DE)
(72) Erfinder: Prell, Bernhard, 86391 Stadtbergen (DE)
(74) Vertreter: Ruschke, Hans Edvard

(56) Entgegenhaltungen:
- EP-A- 0 813 159
- US-A1- 2003 149 843
- FUNKHOUSER T A: "Database management for interactive display of large architectural models" PROCEEDINGS. GRAPHICS INTERFACE '96 CANADIAN INF. PROCESS SOC TORONTO, ONT., CANADA, Mai 1996 (1996-05), Seiten 1-8, XP002314802 ISBN: 0-9695338-5-3
- XUGUANG YANG ET AL: "An optimal and efficient soft caching algorithm for network image retrieval" IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, Bd. 3, 4. Oktober 1998 (1998-10-04), Seiten 12-16, XP010586856 ISBN: 0-8186-8821-1
- ALIAGA D G ET AL INSTITUTE OF ELECTRICAL AND ELECTRONICS ENGINEERS: "Sea of images" VIS 2002. IEEE VISUALIZATION 2002. PROCEEDINGS. BOSTON, MA, OCT. 27 - NOV. 1, 2002, ANNUAL IEEE CONFERENCE ON VISUALIZATION, NEW YORK, NY : IEEE, US, 27. Oktober 2002 (2002-10-27), Seiten 331-338, XP010633310 ISBN: 0-7803-7498-3
- MATOS A ET AL: "Cache management for real time visualization of 2D data sets" COMPUTER GRAPHICS, IMAGE PROCESSING, AND VISION, 1998. PROCEEDINGS. SIBGRAPI '98. INTERNATIONAL SYMPOSIUM ON RIO DE JANEIRO, BRAZIL 20-23 OCT. 1998, LOS ALAMITOS, CA, USA,IEEE COMPUT. SOC, US, 20. Oktober 1998 (1998-10-20), Seiten 111-118, XP010309786 ISBN: 0-8186-9215-4
- CHIUEH T ET AL: "Zodiac: a history-based interactive video authoring system" MULTIMEDIA SYSTEMS SPRINGER-VERLAG GERMANY, Bd. 8, Nr. 3, Oktober 2000 (2000-10), Seiten 201-211, XP002314803 ISSN: 0942-4962
- JIN LI ET AL: "On interactive browsing of large images" IEEE TRANSACTIONS ON MULTIMEDIA IEEE USA, Bd. 5, Nr. 4, Dezember 2003 (2003-12), Seiten 581-590, XP002314804 ISSN: 1520-9210

## Beschreibung

### Technisches Gebiet

Die vorliegende Erfindung betrifft ein Verfahren zur Schaffung einer Cache-Struktur für den Schnellzugriff auf getrennt gespeicherte Objekte, insbesondere einzeln abgespeicherte Bilder eines Videostromes. Weiterhin betrifft die Erfindung ein Computerprogramm zur Schaffung einer solchen Cache- Struktur, das in eine Datenverarbeitungsanlage geladen werden kann und bei seiner Ausführung die Verfahrensschritte ausführt, sowie ein Datenverarbeitungssystem, das eine Einrichtung zum Ausführen der Verfahrensschritte umfaßt.

### Hintergrund und Stand der Technik

In den letzten Jahren hat sich die Aufzeichnung, - bearbeitung und - wiedergabe von Filmen zunehmend von analogen auf digitale Medien verlagert. Im Zuge dieser Entwicklung haben insbesondere Computer- Festplatten als Speichermedium an Bedeutung gewonnen, und aus dem Stand der Technik ist bekannt, Videos in Einzelbildern auf der Festplatte abzuspeichern, wobei die Dateinamen z.B. chronologisch durchnumeriert werden. Wie schon bei den analogen Medien besteht natürlich auch im digitalen Bereich eine ganz grundlegende Anforderung darin, daß die Wiedergabe solcher digital auf Festplatte gespeicherter Filme in jeder Arbeitsumgebung - also auch bei einem üblichen Desktop-Betriebssystem - ruckfrei erfolgen sollte. Das Laden der oben erwähnten Einzelbilder des Videostromes von einem relativ langsamen externen Festplattenspeicher mit nicht wahlfreien Zugriff benötigt jedoch eine nicht genau vorhersagbare Zeit - dies hat verschiedene Gründe.

Zunächst liegen die Bilder wegen der Fragmentierung nicht unbedingt geordnet auf der Platte. Das heißt, der Festplattenlesekopf muß für verschiedene Bilder jeweils neu positioniert werden und es muß gewartet werden, bis die Daten unter dem Kopf "vorbeikommen". Weiterhin werden Daten-Ladeanforderungen an ein Nicht-Echtzeit-Betriebssystem nicht in vorhersehbarer Zeit beantwortet, da die Ladezeit unter anderem von der aktuellen Gesamtlast des Systems abhängig ist, d.h. von der Anzahl der zur Zeit der Ladeanforderung aktiven Prozesse und deren Rechenzeitverbrauch. Die Problematik dieser zeitlichen Daten-Ladeanforderungen spitzt sich natürlich noch weiter zu, wenn gleichzeitig mehrere Datenströme, wie z.B. Filme, von der Festplatte eingelesen und vom Zielsystem wiedergegeben werden sollen.

Nun ist es zwar bekannt, Dateien in einem sogenannten Festplatten-Cache vorzuhalten, den jedes Betriebssystem zur Verfügung stellt - analog werden in Web-Browsem, wie z.B. Netscape®, die aus dem Internet heruntergeladenen Objekte, wie Bilder oder HTML-Code, in einem Cache vorgehalten, um bei nochmaliger Anforderung durch den Browser einen schnelleren Zugriff auf diese Objekte zu haben. Jedoch erfolgt dieses Vorhalten im Cache aufgrund der Anforderungscharakteristik in beiden Fällen ungeordnet, ohne daß evtl. zukünftige Anforderungen näher qualifiziert werden, und daher ohne tiefergehende Kennzeichnung der vorgehaltenen Objekte. Weiterhin sind nur relativ einfache Verfahren zum Verdrängen geladener Objekte aus dem Cache vorhanden. Ein Beispiel ist das LRU- ("last recently used") Verfahren: hierbei werden einfach die am längsten nicht mehr benutzten Element aus dem Cache entfernt, wenn dessen Kapazität erreicht ist.

In dem Dokument "*Database Management for Interactive Display of Large Architectural Models"* (T. A. Funkhouser, AT&T Bell Laboratories, Murray Hill, NJ) wird ein Cache beschrieben, der erwartete Daten im voraus lädt. Dabei handelt es sich allerdings nicht um Bilder eines Videostromes, sondern um Beleuchtungsdaten in 3D- Raummodellen, wobei die Rauminformationen, die demnächst ins Blickfeld einer virtuellen Simulation geraten könnten, rechtzeitig vorgehalten werden. Der Verdrängungsalgorithmus ist eng an das oben genannte LRU-Verfahren angelehnt.

US 2003/0149843 beschreibt anwendungsunabhängige Techniken, um über mehrere als Ringpuffer organisierte Listen die Daten, die während eines längeren Zeitraums immer wieder benötigt werden, auch möglichst lange im Cache zu halten und nicht - wie bei den heutigen mehrwege- assoziativen Caches üblich - einfach zu verdrängen, wenn ein neuer Eintrag mit gleichem Index geladen werden muß.

### Kurze Zusammenfassung der Erfindung

Es ist die Aufgabe der vorliegenden Erfindung, trotz der bei digitalen Speichermedien bestehenden Datenladeprobleme ein System zu schaffen, das die aktuellen Datenanforderungen sehr viel schneller beantworten kann. Insbesondere geht es darum, ein System zur ruckfreien Wiedergabe von Einzelbildern eines Videostromes zu schaffen, das so dimensioniert ist, daß die Ladezeit für alle gleichzeitig auszugebenden Video- Bilder im Schnitt stets unterhalb der notwendigen Zeit liegt, die bei 25 fps (frames per second) 40 ms entspricht.

Das wird erreicht durch ein Verfahren mit den Merkmalen des Anspruchs 1. Gemäß der vorliegenden Erfindung wird pro auszugebenden Videostrom immer eine gewisse Anzahl Bilder (im konkreten Fall 2x25 Bilder für jeweils 1s Wiedergabezeit) ausgehend vom aktuellen Bild vorwärts und rückwärts mit bestimmten Kennzeichnungen versehen und auf Vorrat im Hauptspeicher gehalten, da auf den Hauptspeicher im Vergleich zur Festplatte wesentlich schneller (und darüberhinaus wahlfrei) zugegriffen werden kann. Durch Kennzeichnung und Vorhaltung der vorhergehenden und nachfolgenden Bilder im Hauptspeicher kann die Software funktionalität zur Navigation in Filmen oder Takes (z. B. Einzelbild vorwärts/rückwärts) sowie die Ausgabe kontinuierlicher Bildsequenzen effizienter realisiert werden. Auch das gleichzeitige Laden mehrerer unterschiedlicher Takes wird durch das hier geschilderte Verfahren extrem beschleunigt. Nach Drücken der zuständigen Schaltfläche auf der Benutzeroberfläche vergeht praktisch keine wahrnehmbare Wartezeit bis zur Ausgabe des nächsten oder vorangegangenen Bildes - was verglichen werden kann mit der Möglichkeit, bei Bedarf sofort in einem Buch vor- und zurückzublättern. Bei der kontinuierlichen Filmwiedergabe werden betriebssystemabhängige Ruckeffekte (Wartezeiten auf das nächste Bild) vermieden. Bei Anforderung eines Bildes liegt dieses als ein Feld von Pixelwerten bereits komplett im Hauptspeicher vor und muß zur Ausgabe nur noch in den Speicher der Grafikkarte übertragen werden.

Nach der vorliegenden Erfindung ist ein Verfahren zur Schaffung einer Cache-Struktur für den Schnellzugriff auf getrennt unter eindeutigen Dateinamen gespeicherte Objekte vorgesehen, das dadurch gekennzeichnet ist, daß
auf die Anforderung eines dieser Objekte x hin eine Anforderungsliste aufgebaut bzw. aktualisiert wird, wobei jedes Element der Anforderungsliste die fünf Komponenten "Dateiname", "Status", "Priorität", "Zeiger auf Bilddaten" und "Löschkennzeichen" aufweist, wobei der Aufbau bzw. die Aktualisierung der Anforderungsliste die folgenden Schritte umfaßt:
Setzen des Löschkennzeichens für alle bereits in der Liste vorhandenen Elemente auf WAHR,
Erzeugen neuer Elemente der Anforderungsliste mittels zweier Iteratoren, von denen sich der eine um eine vorbestimmte Anzahl von Schritten ausgehend vom angeforderten Objekt x vorwärts und der andere um eine vorbestimmte Anzahl von Schritten ausgehend vom angeforderten Objekt x rückwärts durch die getrennt unter eindeutigen Dateinamen gespeicherten Objekte bewegt, wobei
   das Löschkennzeichen der neuen Elemente auf FALSCH,
   der Status der neuen Elemente auf Angefordert und
   der Zeiger auf die Bilddaten der neuen Elemente auf Leer gesetzt wird, sofern Elemente zu den von den Iteratoren gefundenen Objekten mit diesen Dateinamen noch nicht in der Liste enthalten sind, oder
Setzen des Löschkennzeichens derjenigen bereits in der Liste vorhandenen Elemente auf FALSCH, deren Dateinamen den Dateinamen der von den Iteratoren gefundenen Objekte identisch sind,
Setzen der Priorität der Elemente der Anforderungsliste mit dem Löschkennzeichen FALSCH in Abhängigkeit vom angeforderten Objekt x, wobei Objekt x die höchste Priorität erhält, das nächst nachfolgende die zweithöchste Priorität, das nächst vorangegangene die dritthöchste Priorität usw.; und daß
nach dem erfolgten Aufbau bzw. der Aktualisierung der Anforderungsliste diejenigen in ihr benannten Objekte in den Hauptspeicher geladen werden, deren Status auf Angefordert gesetzt ist, wobei der Ladevorgang die folgenden Schritte umfaßt:
Laden der Objekte in der Reihenfolge der ihnen über die Elemente der Anforderungsliste zugeordneten Priorität in den Hauptspeicher,
Setzen des Zeigers auf die Bilddaten dieser in den Hauptspeicher geladenen Elemente auf Gültige Bilddaten,
Setzen des Status' dieser in den Hauptspeicher geladenen Elemente auf Fertig und
Löschen derjenigen Elemente der Anforderungsliste, deren Löschkennzeichen auf WAHR gesetzt ist.

Besonders vorteilhafte Ausgestaltungen ergeben sich aus den abhängigen Ansprüchen.

### Detaillierte Beschreibung der bevorzugten Ausführungsformen

Das erfindungsgemäße Datenverarbeitungssystem liest die von einer Videokamera einlaufenden Bilder über eine Video-Grabberkarte oder eine Festplatte ein. In der Eingangsschicht des erfindungsgemäßen Computerprogramms ist zu diesem Zweck ein eigener leichtgewichtiger Prozeß, ein sogenannter Thread, vorgesehen, der hier mit GrabThread bezeichnet wird und die Bilddaten vom Grabberkarten-Treiber anfordert und erhält. Zusätzlich steuert der GrabThread einen ihm zugeordneten writeThread, der die Bilder während einer Aufnahme - z.B. in JPEG-komprimierter Form - auf die Festplatte schreibt. Der Grund für diese Arbeitsteilung des Einlesens und Schreibens besteht darin, daß der GrabThread keine Zeit durch Schreiben auf die Festplatte verlieren sollte, während er die Bilddaten von der Grabberkarte einliest. Um sicherzustellen, daß die Threads tatsächlich nebenläufig arbeiten, können mehrere Intel-Xeon-CPUs eingesetzt werden, die zusätzlich im Hyper-Threading-Modus (Intel-Bezeichnung für Simultanes Multithreading) arbeiten. Um einen so aufgezeichneten Film dann von Festplatte wiedergeben zu können, wird ein Objekt benötigt, das hier als DiscPlayer bezeichnet wird und nur-lesend auf einer zentralen Liste der aufgenommenen Takes arbeitet, wobei jeder Take wiederum eine Liste aller Einzelbilder, sogenannter Frames, hat. Dabei hat der DiscPlayer einen Iterator, der auf den gerade aktiven Take, und einen Iterator, der auf den gerade aktiven Frame zeigt. Bei diesen Iteratoren handelt es sich um eine objektorientierte gekapselte Form eines Zeigers. Er kann vor- oder zurückgeschaltet, d.h. inkrementiert oder dekrementiert, werden und zeigt dann dementsprechend auf das nächste oder vorhergehende Objekt der Liste, auf das mit Hilfe des Iterators zugegriffen werden kann. Im folgenden wird nun genauer die erfindungsgemäße Cache-Struktur beschrieben, die eine ruckfreie Wiedergabe ermöglicht.

Wie schon gesagt, besteht die Aufgabe des Systems darin, so schnell wie möglich diejenigen Bilder aus der Liste aller möglichen Bilder (z. B. eines bestimmten Filmes oder "Takes") zu liefern, die z.B. vor und hinter dem Bild mit der Nummer x liegen. Zunächst wird daher auf die Anforderung eines bestimmten Bildes x durch die Anwendungssoftware, d.h. durch den DiscPlayer, hin eine Anforderungsliste aufgebaut. Die dabei aufgerufene Funktion getCurrentImage fordert das Bild x an, auf das die beiden Iteratoren gerade zeigen, und erzeugt die Anforderungsliste bzw. erneuert sie. Diese Anforderungsliste wird einem nebenläufigen Lade-Prozeß CalcThread mitgeteilt, der dann so schnell wie möglich diejenigen Objekte von der Festplatte in den Cache lädt, die entsprechend in der Anforderungsliste gekennzeichnet sind. Sobald CalcThread ein Bild geladen hat, sendet er eine Nachricht an DiscPlayer, der es dann anzeigen kann - Voraussetzung für das Senden dieser Nachricht ist allerdings, daß bei Anforderung eines Bildes dieses noch nicht in den Hauptspeicher geladen war. Ein Element CalcItem der Anforderungsliste hat die folgenden Komponenten:
- Dateiname des Elements: z. B. Bildnummer - jedes Element, d.h. Bild, wird mit einem bestimmten eindeutigen Schlüssel (bestehend aus einer Zeichenkette) hinterlegt.
- Status des Elements: Angefordert, In Bearbeitung, Fertig - der Status zeigt an, ob ein Element bereits in den Hauptspeicher geladen ist.
- Priorität des Elements: Elemente mit einem niedrigeren Wert haben die höhere Priorität; die Priorität regelt, in welcher Reihenfolge die Elemente in den Hauptspeicher geladen werden und orientiert sich am direkt angeforderten Bild - dieses erhält Priorität o, das nachfolgende Priorität 1, das vorangehende Priorität 2, das zweite nachfolgende Priorität 3, das zweite vorangehende Priorität 4 und so weiter.
- Zeiger auf Bilddaten: Der Zeiger wird mit Leer (undefiniert) initialisiert und erst dann auf sinnvolle, d.h. Gültige, Werte gesetzt, wenn der Status auf Fertig gesetzt ist.
- Löschkennzeichen: WAHR, FALSCH.

Der Aufbauvorgang der Anforderungsliste vollzieht sich wie folgt. Im allgemeinen Fall ist aufgrund einer bereits erfolgten Anforderung eines Bildes w schon eine Anforderungsliste vorhanden - um diese aufgrund einer Anforderung eines neuen Bildes x zu aktualisieren, wird eine Art Schnittmengen-Operation zwischen dem bisherigen Listeninhalt und dem zukünftigen Inhalt durchgeführt, da diejenigen Elemente, die auch künftig noch benötigt werden, natürlich in der Liste verbleiben sollen. Dazu wird zunächst ein Löschkennzeichen für alle Elemente pauschal auf WAHR gesetzt. Dann folgt die eigentliche Einfügephase. In ihr werden mittels zweier Iteratoren - von denen sich der eine vorwärts und der andere rückwärts, jeweils ausgehend vom zentralen angeforderten neuen Bild x und jeweils um eine vorbestimmte Anzahl von Schritten, z.B. 25, durch die Bilderliste des gewünschten Filmes bewegt - neue Elemente der Anforderungsliste erzeugt, die mit dem Status Angefordert und dem Löschkennzeichen FALSCH versehen und deren Zeiger auf die Bilddaten auf Leer gesetzt werden, sofern Elemente zu den von den Iteratoren gefundenen Objekten mit diesen Dateinamen noch nicht in der Anforderungsliste enthalten sind. Sind solche Elemente augfrund einer früheren Anfrage schon enthalten, werden keine neuen Elemente erzeugt, sondern lediglich die Löschkennzeichen dieser bereits vorhandenen Elemente von WAHR auf FALSCH gesetzt. Sodann wird die Priorität der Elemente, deren Löschkennzeichen auf FALSCH gesetzt ist, neu angepasst, da sich die Priorität ja nun am neuen Bild x orientieren muß. (Die Prioritäten der Elemente, deren Löschkennzeichen nach wie vor auf WAHR gesetzt ist - d.h. also derjenigen Elemente, die ausgehend vom neu angeforderten Bild x nicht mehr benötigt werden -, bleiben dabei unberührt. Auf diese Weise kann zwar dieselbe Priorität zweimal in der Liste vergeben sein, es kann jedoch beim Laden nicht zu Verwechslungen kommen, da nur diejenigen Objekte geladen werden, die den mit dem Status ANGEFORDERT versehenen Elementen zugeordnet sind, deren Löschkennzeichen, wie oben erwähnt, wiederum auf FALSCH gesetzt worden ist.) Im folgenden ist ein Code-Beispiel für diesen Aufbau der Anforderungsliste angegeben:

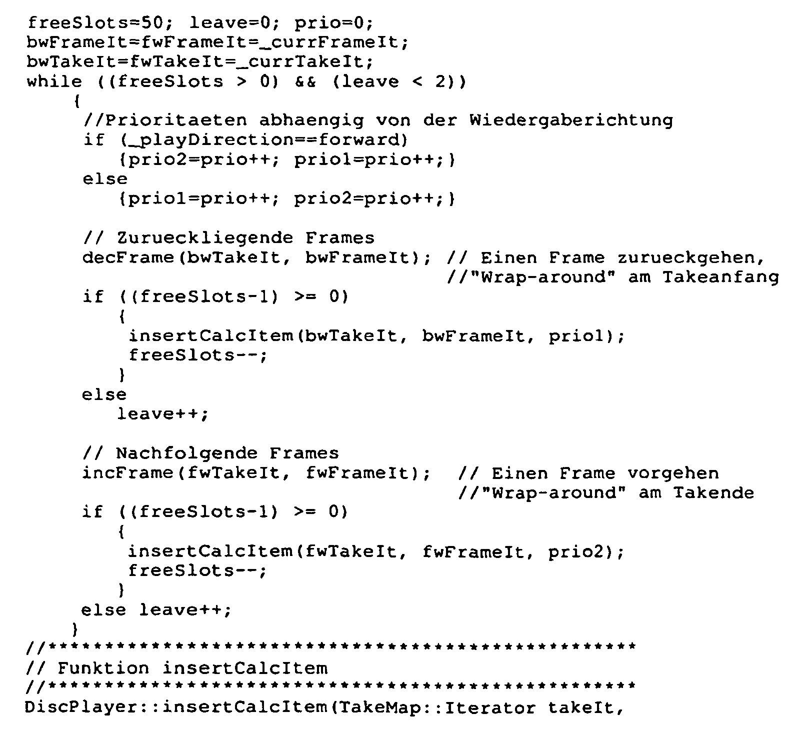

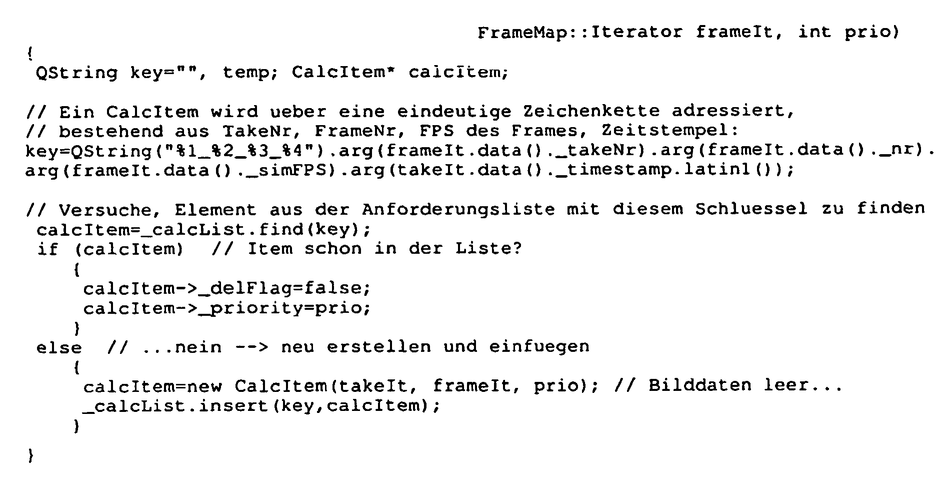

Als Resultat erhält man also für den DiscPlayer z.B. eine Liste mit der folgenden Struktur:

| Dateiname | Status | Priorität | Löschen | Bilddaten |
|---|---|---|---|---|
| Bild 50 | Angefordert | 0 | FALSCH | Leer |
| Bild 51 | Angefordert | 1 | FALSCH | Leer |
| Bild 49 | Angefordert | 2 | FALSCH | Leer |
| Bild 52 | Angefordert | 3 | FALSCH | Leer |
| Bild 48 | Angefordert | 4 | FALSCH | Leer |
| ... ... | ... | ... | ... | |
| Bild 54 | Angefordert | 7 | FALSCH | Leer |
| Bild 46 | Angefordert | 8 | FALSCH | Leer |
| Bild 55 | Fertig | 9 | FALSCH | Gültig |
| Bild 45 | Angefordert | 10 | FALSCH | Leer |
| Bild 56 | Fertig | 11 | FALSCH | Gültig |
| Bild 44 | Angefordert | 12 | FALSCH | Leer |
| ... ... | ... | ... | ... | |
| Bild 75 | Fertig | 49 | FALSCH | Gültig |
| Bild 25 | Angefordert | 50 | FALSCH | Leer |
| Bild 76 | Fertig | 8 | WAHR | Gültig |
| Bild 77 | Fertig | 6 | WAHR | Gültig |
| ... ... | ... | ... | ... | |
| Bild 105 | Fertig | 49 | WAHR | Gültig |

In diesem Beispiel hat das neu angeforderte Bild die Nummer x = 50 und die Anzahl der nachfolgenden und vorangehenden in den Hauptspeicher zu ladenden Bilder beträgt 25. Die Bilder 55-105 sind in diesem Beispiel aufgrund einer vorherigen Anfrage nach Bild 80 noch im Hauptspeicher vorhanden (zu sehen an ihrem Status Fertig) - da jedoch nur noch jeweils 25 Bilder vor und nach Bild 50 benötigt werden, ist das zunächst pauschal für alle Bilder auf WAHR gesetzte Löschkennzeichen für die Bilder 76-105 (und damit auch deren alte Priotitäten, siehe oben) beibehalten worden.

Für die Liste wurde eine Datenstruktur gewählt, mit der sich in möglichst kurzer Zeit überprüfen läßt, ob ein bestimmtes Element schon enthalten ist oder nicht, ohne daß jedes Element, d.h. jedes Bild, bei jeder Einfügeoperation angesehen werden muß. Dabei handelt es sich um ein Dictionary (Wörterbuch), d.h. jedes Element wird anhand einer Hash-Listen-Struktur mit einem bestimmten Schlüssel (bestehend aus einer Zeichenkette) hinterlegt, aus dem direkt die Referenz berechnet werden kann, mit der auf das Element zugegriffen werden wird, sodaß die Zugriffe sofort erfolgen und nicht wie z.B. bei einer verketteten Liste über alle Elemente iteriert werden muß, bis das gewünschte Element gefunden ist. Durch die Verwendung eines solchen Dictionary wird das erfindungsgemäße Verfahren erheblich beschleunigt. Im konkret betrachteten Fall ist der Schlüssel aus Takenummer, Framenummer, aktueller Framerate des Frames und Zeitstempel des Takes zusammengesetzt. So bedeutet z.B. "246_11_50_83de": Take 46, Frame 11, Framerate 50 FPS, Zeitstempel (hexadezimal codiert).

Nachdem die Anforderungsliste aufgebaut worden ist, erfolgt der eigentliche Ladevorgang der Bilder in den Hauptspeicher. Der Lade-Prozeß CalcThread holt sich in einer Schleife jeweils das Element mit der höchsten Priorität und dem Status Angefordert, lädt die darin angegebene Datei von Festplatte in den Hauptspeicher (schon geladene Elemente mit dem Status Fertig verbleiben dort), setzt den Zeiger in diesem Fall von Leer auf Gültige Bilddaten und den Status von Angefordert auf Fertig. Trifft der Lade-Prozeß CalcThread auf ein Element mit dem Löschkennzeichen WAHR, löscht er es - das entlastet den Prozeß DiscPlayer, der die Bilder anfordert und anzeigt. Wenn der Lade-Prozeß CalcThread keine ungeladenen und/oder zu löschenden Elemente mehr findet, d.h. wenn alle Elemente sowohl die Kennzeichnung Fertig als auch die Kennzeichnung Falsch aufweisen, geht er in einen Sleep-Zustand über. Im folgenden ist ein Code-Beispiel für diesen Ladeprozeß angegeben:

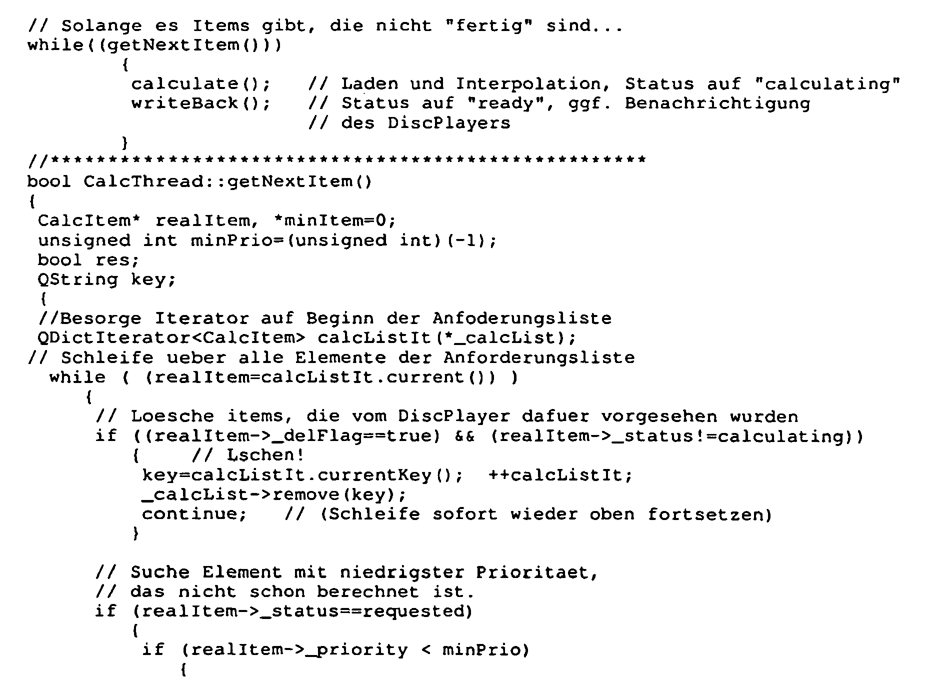

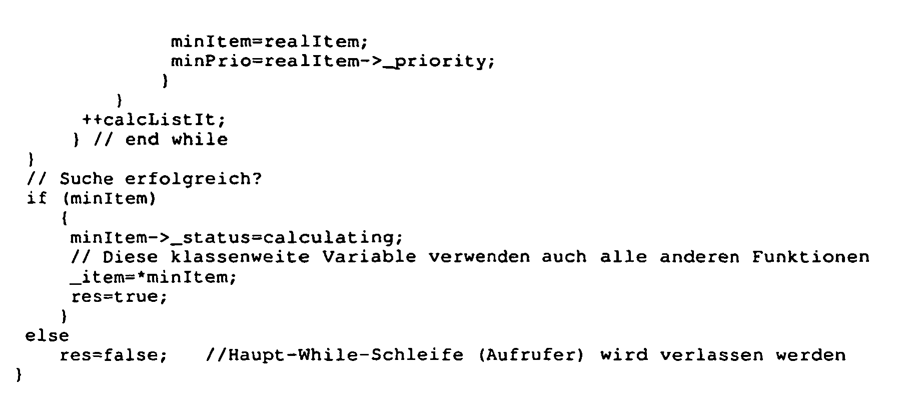

Eine kontinuierliche Wiedergabe erfolgt somit durch den erfindungsgemäßen auf der Anforderungsliste basierenden Lade-Prozeß völlig ruckfrei, da die Anwendungssoftware nur auf das allererste Bild warten muß, bis es geliefert wird - in der Regel steht bereits das 2. Bild in weniger als den geforderten 40 ms zu Verfügung. Alle darauffolgenden Anforderungen stehen praktisch immer rechtzeitig bereit, da sie ja erst nach x *40 ms benötigt werden.

Durch eine Verfeinerung der Strategie kann zusätzlich jeweils das erste Bild des aktuell betrachteten Takes sowie des nachfolgenden und des vorangehenden Takes dauernd im Cache gehalten werden. So entsteht bei einem Wiedergabe-Stop mit anschließendem Neustart der Ausgabe des gleichen Takes sowie beim einfachem Überspringen ("Take-Skip") in Vor- oder Rückwärtsrichtung keine Wartezeit.

Weiterhin kann der erfindungsgemäße auf der Anforderungsliste basierende Lade-Prozeß z.B. äußerst effektiv im Zusammenhang mit der Zeitlupe verwendet werden, indem noch weitere Schritte hinzugefügt werden. In diesem Fall unterstützt der Cache zusätzlich noch interpolierte Bilder für die Zeitlupe.

Das heißt, jedes Element der Anforderungsliste enthält nicht nur ein Bild, wie es oben eingehend beschrieben worden ist, sondern unter Umständen mehrere Bilder, die aus dem aktuellen und dem nachfolgenden Originalbild errechnet werden. Bei einer simulierten Zeitlupe von 100 Bildern pro Sekunde enthält ein Anforderungselement dann z.B. 4 Bilder pro Originalbild.

Hierfür ist die Elementstruktur z. B. um den Dateinamen des Nachfolgebildes und die Anzahl der "Unterbilder" erweitert; die Bild-Interpolation für die Zeitlupen-Realisierung wird ebenfalls direkt vom Lade-Prozeß CalcThread durchgeführt. Im folgenden ist ein Code-Beispiel für die Integration der Zeitlupe angegeben:

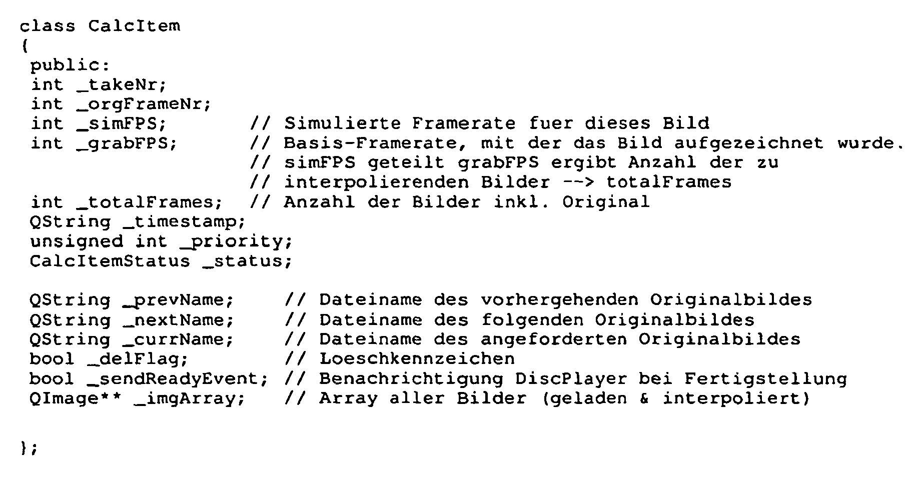

Die vorliegende Erfindung ist nicht auf die oben beschriebenen Ausführungsformen beschränkt. Die obige Beschreibung anhand von Festplatten zur Speicherung gilt in gleicher Weise für andere Speichermedien, insbesondere Speichermedien, die keinen wahlfreien Zugriff erlauben, wie z.B. CD-ROMS, DVDs, Netzwerk-Laufwerke usw.

## Patentansprüche

1. Verfahren zur Schaffung einer Cache- Struktur für den Schnellzugriff auf getrennt unter eindeutigen Dateinamen gespeicherte Objekte, wobei auf die Anforderung eines dieser Objekte x hin eine Anforderungsliste aufgebaut bzw. aktualisiert wird und nach dem erfolgten Aufbau bzw. der Aktualisierung der Anforderungsliste bestimmte in ihr benannte Objekte in den Hauptspeicher geladen werden,
**dadurch gekennzeichnet, daß**
jedes Element der Anforderungsliste die fünf Komponenten "Dateiname", "Status", "Priorität", "Zeiger auf Bilddaten" und "Löschkennzeichen" aufweist, wobei der Aufbau bzw. die Aktualisierung der Anforderungsliste die folgenden Schritte umfaßt:
Setzen des Löschkennzeichens für alle bereits in der Anforderungsliste vorhandenen Elemente auf WAHR,sodann entweder
Erzeugen neuer Elemente der Anforderungsliste mittels zweier Iteratoren, von denen sich der eine um eine vorbestimmte Anzahl von Schritten ausgehend vom angeforderten Objekt x vorwärts und der andere um eine vorbestimmte Anzahl von Schritten ausgehend vom angeforderten Objekt x rückwärts durch die getrennt unter eindeutigen Dateinamen gespeicherten Objekte bewegt, wobei
das Löschkennzeichen der neuen Elemente auf FALSCH,
der Status der neuen Elemente auf Angefordert und
der Zeiger auf die Bilddaten der neuen Elemente auf Leer gesetzt wird, sofern Elemente zu den von den Iteratoren gefundenen Objekten mit diesen Dateinamen noch nicht in der Anforderungsliste enthalten sind, oder
Setzen des Löschkennzeichens derjenigen bereits in der Anforderungsliste vorhandenen Elemente auf FALSCH, deren Dateinamen den Dateinamen der von den Iteratoren gefundenen Objekte identisch sind, sodann
Setzen der Priorität der Elemente der Anforderungsliste mit dem Löschkennzeichen FALSCH in Abhängigkeit vom angeforderten Objekt x, wobei Objekt x die höchste Priorität erhält, das nächst nachfolgende die zweithöchste Priorität, das nächst vorangegangene die dritthöchste Priorität usw.; und daß
diejenigen in der Anforderungsliste benannten Objekte in den Hauptspeicher geladen werden, deren Status auf Angefordert gesetzt ist, wobei der Ladevorgang die folgenden Schritte umfaßt:
Laden der Objekte in der Reihenfolge der ihnen über die Elemente der Anforderungsliste zugeordneten Priorität in den Hauptspeicher, sodann
Setzen des Zeigers auf die Bilddaten dieser in den Hauptspeicher geladenen Elemente auf Gültige Bilddaten, sodann
Setzen des Status' dieser in den Hauptspeicher geladenen Elemente auf Fertig, sodann
Löschen derjenigen Elemente der Anforderungsliste, deren Löschkenn zeichen auf WAHR gesetzt ist.

2. Verfahren nach Anspruch 1, **dadurch gekennzeichnet, daß** ein Dictionary verwendet wird, bei dem jedes Element mit einem bestimmten Schlüssel hinterlegt wird, aus dem direkt die Referenz berechnet wird, mit der auf das Element zugegriffen wird.

3. Verfahren nach einem der vorangegangenen Ansprüche, **dadurch gekennzeichnet, daß** es sich bei den getrennt gespeicherten Objekten um Einzelbilder eines Videos handelt.

4. Verfahren nach Anspruch 3, **dadurch gekennzeichnet, daß** jeweils das erste Bild des aktuell angeforderten Takes sowie des nachfolgenden Takes und des vorangehenden Takes dauernd im Cache gehalten wird.

5. Verfahren nach einem der Ansprüche 3-4, **dadurch gekennzeichnet, daß** jedes Element weiterhin den Dateinamen des Nachfolgebildes sowie mehrere Unterbilder enthält, die durch Bild-Interpolation aus dem Bild und dem Nachfolgebild errechnet worden sind.

6. Computerprogramm zur Schaffung einer Cache-Struktur für den Schnellzugriff auf getrennt unter eindeutigen Dateinamen gespeicherte Objekte, das in eine Datenverarbeitungsanlage geladen werden kann und bei seiner Ausführung die Schritte des Verfahrens nach einem der vorangegangenen Ansprüche ausführt.

7. Datenverarbeitungssystem, das Einrichtungen zum Ausführen der Schritte des Verfahrens nach einem der Ansprüche 1-5 umfaßt.

## Claims

1. Method for creating a cache structure for rapid access to objects stored separately under unique file names, where the request for one of these objects x is followed by a request list being set up or updated, and setup or updating of the request list is followed by particular objects named in it being loaded into the main memory,
**characterized in that**
each element on the request list has the five components "file name", "status", "priority", "pointer to image data" and "deletion identifier", with setup or updating of the request list comprising the following steps:
the deletion identifier for all elements which are already in the request list is set to TRUE, and then either
new elements on the request list are produced using two iterators, one of which moves forward by a predetermined number of steps starting from the requested object x and the other of which moves backward by a predetermined number of steps starting from the requested object x through the objects stored separately under unique file names, where
the deletion identifier of the new elements is set to FALSE,
the status of the new elements is set to REQUESTED, and
the pointer to the image data of the new elements is set to EMPTY,
if elements for the objects with these file names which the iterators have found are not yet contained in the request list, or
the deletion identifier of those elements already in the request list whose file names are identical to the file names of the objects found by the iterators is set to FALSE, and then
the priority of the elements on the request list with the deletion identifier FALSE is set on the basis of the requested object x, where object x is provided with the highest priority, the next one after is provided with the second highest priority, the next one before is provided with the third highest priority etc.; and **in that**
those objects named in the request list whose status has been set to REQUESTED are loaded into the main memory, with the loading operation comprising the following steps:
the objects are loaded into the main memory in the order of the priority associated with them by means of the elements on the request list, and then
the pointer to the image data of these elements which have been loaded into the main memory is set to VALID image data, and then
the status of these elements loaded into the main memory is set to READY, and then
those elements on the request list whose deletion identifier has been set to TRUE are deleted.

2. Method according to Claim 1, **characterized in that** a dictionary is used in which each element is stored with a particular key which is used directly to calculate the reference which is used to access the element.

3. Method according to one of the preceding claims, **characterized in that** the separately stored objects are frames in a video.

4. Method according to Claim 3, **characterized in that** the respective first frame of the currently requested take and of the subsequent take and of the preceding take is held permanently in the cache.

5. Method according to one of Claims 3-4, **characterized in that** each element continues to contain the file name of the subsequent frame and also a plurality of subframes which have been calculated by frame interpolation from the frame and the subsequent frame.

6. Computer program for creating a cache structure for rapid access to objects stored separately under unique file names, said computer program being able to be loaded into a data processing installation and, when executed, executing the steps of the method according to one of the preceding claims.

7. Data processing system which comprises devices for executing the steps of the method according to one of Claims 1-5.

## Revendications

1. Procédé pour création d'une structure de mémoire cache pour l'accès rapide à des objets stockés séparément sous des noms de fichiers univoques, dans lequel sur demande de l'un de ces objets x une liste d'appel est créée ou actualisée, et une fois la création ou l'actualisation de la liste d'appel assurée des objets déterminés nommés dans cette dernière sont chargés dans la mémoire principale,
**caractérisé en ce que**
chaque élément de la liste d'appel présente les cinq composants « nom de fichier », « état », « priorité », « pointeur sur données d'images » et « code d'effacement », la création ou l'actualisation de la liste d'appel comprenant les étapes suivantes :
fixation du code d'effacement pour tous les éléments déjà disponibles dans la liste d'appel à VRAI, puis soit
création de nouveaux éléments de la liste d'appel au moyen de deux itérateurs dont l'un se déplace d'un nombre de pas prédéterminé vers l'avant à partir de l'objet demandé x et l'autre se déplace d'un nombre de pas prédéterminé vers l'arrière à partir de l'objet demandé x au travers des objets stockés séparément sous des noms de fichiers univoques,
le code d'effacement des nouveaux éléments étant fixé à FAUX,
l'état des nouveaux éléments à Appelé et
le pointeur sur les données d'images des nouveaux éléments à Vide, dans la mesure où des éléments sur les objets trouvés par les itérateurs avec ces noms de fichiers ne sont pas encore contenus dans la liste d'appel, soit
fixation du code d'effacement des éléments déjà disponibles dans la liste d'appel dont des noms de fichiers sont identiques aux noms de fichiers des objets trouvés par les itérateurs à FAUX, puis
fixation de la priorité des éléments de la liste d'appel avec le code d'effacement FAUX en fonction de l'objet demandé x, l'objet x recevant la première priorité, l'objet immédiatement suivant la deuxième priorité, l'objet immédiatement précédent la troisième priorité etc. ; et que
les objets chargés dans la mémoire principale nommés dans la liste d'appel sont ceux dont l'état est fixé à Demande, l'opération de chargement comprenant les phases suivantes :
chargement des objets dans l'ordre de la priorité, qui leur est associée par les éléments de la liste d'appel dans la mémoire principale, puis
fixation du pointeur sur les données d'images de ces éléments chargés dans la mémoire principale à données d'images Valables, puis
fixation de l'état de ces éléments chargés dans la mémoire principale à Fin, puis
effacement des éléments de la liste d'appel dont le code d'effacement est fixé à VRAI.

2. Procédé suivant la revendication 1, **caractérisé en ce qu'**un dictionnaire est utilisé, dans lequel chaque élément est consigné avec une clef déterminée, à partir de laquelle est calculée directement la référence permettant l'accès à l'élément.

3. Procédé suivant l'une des revendications précédentes, **caractérisé en ce que** les objets stockés séparément sont des images individuelles d'une vidéo.

4. Procédé suivant la revendication 3, **caractérisé en ce que** chaque première image de la prise de vue demandée à un instant donné ainsi que de la prise de vue suivante et de la prise de vue précédente est gardée en permanence dans la mémoire cache.

5. Procédé suivant l'une des revendications 3 - 4, **caractérisé en ce que** chaque élément comporte en outre le nom de fichier de l'image suivante ainsi que plusieurs sous-images, qui ont été calculées par interpolation d'image à partir de l'image et de l'image suivante.

6. Programme ordinateur pour la création d'une structure de mémoire cache pour l'accès rapide à des objets stockés séparément sous des noms de fichiers univoques, qui peut être chargé dans un système de traitement de données et exécute lors de sa mise en oeuvre les étapes du procédé suivant l'une des revendications précédentes.

7. Système de traitement de données, qui comprend des dispositifs pour la mise en oeuvre des étapes du procédé suivant l'une des revendications 1 - 5.
